# EUROPEAN PATENT APPLICATION

(11) **EP 4 775 382 A1**
(43) Date of publication of application: **15.07.2026**
(21) Application number: 24877281.6
(22) Date of filing: 11.10.2024
(51) Int. Cl.: B29C 64/393, B29C 64/118, B29C 64/188

(54) **METHOD AND PROGRAM FOR BUILDING UP THREE-DIMENSIONAL ARTICLE**

(30) Priority: 13.10.2023 JP 2023177464
(71) Applicant: KABUSHIKI KAISHA KOBE SEIKO SHO (KOBE STEEL, LTD.), Hyogo 651-8585 (JP)
(72) Inventor: ANDO, Taka, Kobe-shi, Hyogo 651-2271 (JP); FUJIURA, Takayasu, Kobe-shi, Hyogo 651-2271 (JP); TAKENAKA, Makoto, Kobe-shi, Hyogo 651-2271 (JP)
(74) Representative: TBK
(86) International application number: PCT/JP2024/036459
(87) International publication number: WO 2025/079687

(57) **Abstract**

A method for manufacturing a three-dimensional manufactured object using, as a manufacturing material, a fiber reinforced resin filament in which a base material containing a thermoplastic resin is impregnated with at least one fiber or fiber bundle, the method including a first step of heating the fiber reinforced resin filament and extruding the heated fiber reinforced resin filament onto an extrusion target surface to form a deposited layer of the fiber reinforced resin filament on the extrusion target surface. In the first step, a thickness t₁ of each layer of the deposited layer is formed to be % or more of a diameter before extrusion and smaller than the diameter before extrusion of the fiber reinforced resin filament.

## Description

### TECHNICAL FIELD

The present invention relates to a method for manufacturing a three-dimensional manufactured object and a program.

### BACKGROUND ART

As "three-dimensional manufacturing" which involves molding a three-dimensional manufactured object, various methods such as a stereo lithography apparatus (SLA) method and a fused deposition modeling (FDM) method are well-known. Patent Literature 1 discloses, as a manufacturing method using a fiber reinforced composite filament in the FDM method, a three-dimensional manufacturing method broadly include three steps: supplying the fiber reinforced composite filament, heating the supplied fiber reinforced composite filament inside a nozzle, and pressing the heated fiber reinforced composite filament in a deposition direction at a nozzle tip. In this three-dimensional manufacturing method, the filament is supplied while being held between a pair of rollers, and the filament is heated, melted, and compressed in a non-contact region with the filament inside the nozzle or at an ironing portion of the nozzle tip.

### CITATION LIST

### PATENT LITERATURE

Patent Literature 1: JP2016-520459A

### SUMMARY OF INVENTION

### TECHNICAL PROBLEM

Generally, in a 3D printer using the FDM method that uses a resin filament alone or in combination with a reinforced fiber-containing filament, when a lamination pitch of filaments increases, the porosity of a manufactured object increases, and mechanical properties are significantly reduced. In manufacturing using a fiber reinforced resin filament, it is necessary to spread the fiber to a desired dimension and shape. Therefore, in the above Patent Literature 1, a step of pressing the filament between the nozzle and a table to a diameter equal to or less than a diameter of a non-melted filament is performed, but as the diameter of the filament increases and a fiber content of the filament increases, it becomes difficult to spread the fibers. As a result, there is a risk of quality degradation, such as roughening of a manufactured surface and increased porosity of the manufactured object. When the lamination pitch changes due to the increased diameter of the filament, a method for optimizing layer settings to perform manufacturing with low porosity has not yet been established.

Therefore, an object of the present invention is to provide a program and a method for manufacturing a three-dimensional manufactured object that prevents an increase in porosity of a manufactured object and obtains a high-quality manufactured object even when a diameter of a filament increases or a fiber content of the filament increases.

### SOLUTION TO PROBLEM

The present invention includes the following configurations.
(1) A method for manufacturing a three-dimensional manufactured object using, as a manufacturing material, a fiber reinforced resin filament in which a base material containing a thermoplastic resin is impregnated with at least one fiber or fiber bundle, the method including:
   a first step of heating the fiber reinforced resin filament and extruding the heated fiber reinforced resin filament onto an extrusion target surface to form a deposited layer of the fiber reinforced resin filament on the extrusion target surface, in which
   in the first step, a thickness of each layer of the deposited layer is formed to be 40% or more of a diameter before extrusion and smaller than the diameter before extrusion of the fiber reinforced resin filament.
(2) A program that generates control information for manufacturing a three-dimensional manufactured object using, as a manufacturing material, a fiber reinforced resin filament in which a base material containing a thermoplastic resin is impregnated with at least one fiber or fiber bundle, in which
   the program causes a computer to execute a procedure of, in a first step of heating the fiber reinforced resin filament and extruding the heated fiber reinforced resin filament onto an extrusion target surface to form a deposited layer of the fiber reinforced resin filament on the extrusion target surface, forming a thickness of each layer of the deposited layer to be 40% or more of a diameter before extrusion and smaller than the diameter before extrusion of the fiber reinforced resin filament.

### ADVANTAGEOUS EFFECTS OF INVENTION

According to the present invention, an increase in porosity of a manufactured object is prevented, and a high-quality manufactured object is obtained even when a diameter of a filament increases or a fiber content of the filament increases.

### BRIEF DESCRIPTION OF DRAWINGS

[FIG. 1] FIG. 1 is a schematic configuration diagram showing an embodiment of an FDM-method type three-dimensional additive manufacturing device.
[FIG. 2] FIG. 2 is a cross-sectional view of a nozzle.
[FIG. 3] FIG. 3 is a schematic configuration diagram of a filament manufacturing device.
[FIG. 4] FIG. 4 is a flowchart showing a procedure of a manufacturing method of the present embodiment.
[FIG. 5] FIG. 5 is a step illustration diagram schematically showing a process executed by a first step and a second step.
[FIG. 6] FIG. 6 is a step illustration diagram schematically showing a mode in which a compressed deposited layer is formed by changing a head height in the first step and the second step.
[FIG. 7] FIG. 7 is a schematic diagram showing a cross-sectional shape perpendicular to a longitudinal direction of a filament to be supplied.
[FIG. 8] FIG. 8 is an illustration diagram schematically showing a state of the filament shown in FIG. 7 compressed in the first step.
[FIG. 9] FIG. 9 is an illustration diagram schematically showing the compressed deposited layer formed by compressing a deposited layer in the second step.
[FIG. 10] FIG. 10 is a graph showing a surface roughness Sz in Test Examples 1 to 4 and Test Example 13.
[FIG. 11] FIG. 11 is a graph showing the surface roughness Sz in Test Examples 5 to 8 and Test Example 14.
[FIG. 12] FIG. 12 is a graph showing the surface roughness Sz in Test Examples 9 to 12 and Test Example 15.

### DESCRIPTION OF EMBODIMENTS

Hereinafter, embodiments of the present invention will be described in detail with reference to the drawings.

### <Three-dimensional Additive Manufacturing Device>

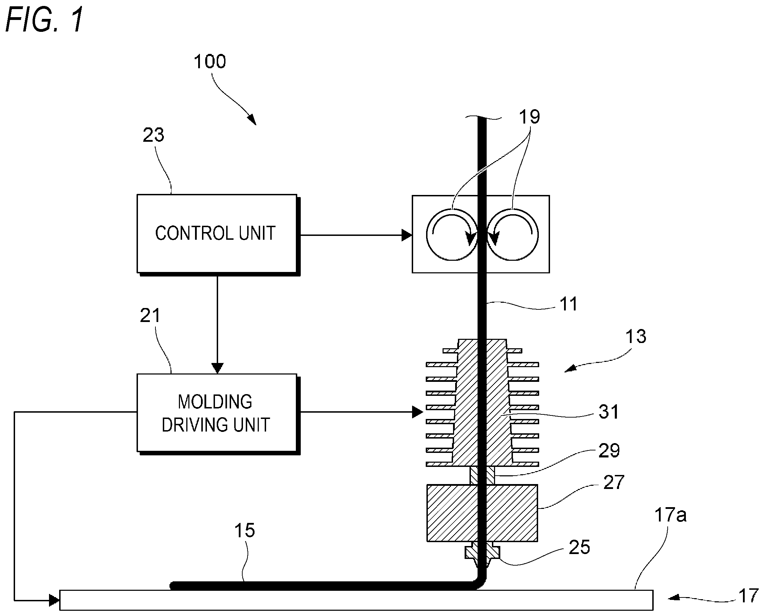

FIG. 1 is a schematic configuration diagram showing an embodiment of an FDM-method type three-dimensional additive manufacturing device 100. The three-dimensional additive manufacturing device 100 manufactures a three-dimensional manufactured object by supplying a fiber reinforced resin filament (hereinafter, also referred to as "filament") 11 to a hot end 13 and sequentially depositing, onto a table 17, a deposited layer 15 formed by a melted filament melted by heating.

The filament 11 is drawn out from a filament supply device (not shown) by a pair of feed rollers 19 and is supplied to the hot end 13. The hot end 13 is capable of relative movement in a horizontal direction with respect to the table 17 by a molding driving unit 21. The control unit 23 is connected to the feed rollers 19 and the molding driving unit 21 to control respective units. The control unit 23 is implemented by a computer including a processor such as a CPU, and a storage device such as a read only memory (ROM), a random access memory (RAM), a hard disk drive (HDD), and a solid state drive (SSD). In this case, functions of the respective units shown in FIG. 1 can be achieved by a processor executing a predetermined program stored in the storage device.

The hot end 13 includes a nozzle 25 disposed at a tip end, a heat block 27, a heat break 29, and a heatsink 31. The heat block 27 has a built-in heater (not shown), and heats the nozzle 25 using heat generated by the heater. The heat break 29 prevents heat transfer from the heat block 27 to the heatsink 31. The heatsink 31 has a function of dissipating heat to prevent heat from the heat block 27 from being transferred to the filament 11 at an upstream side of the heat block 27.

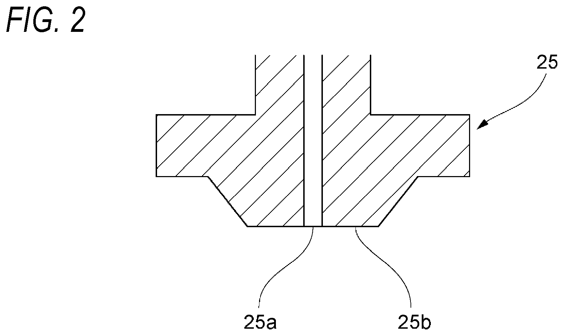

FIG. 2 is a cross-sectional view of the nozzle 25. The nozzle 25 has an extrusion port 25a from which a melted filament obtained by heating the filament 11 is extruded, and a smooth surface 25b formed around the extrusion port 25a. The smooth surface 25b is a flat surface or a convex curved surface protruding toward a front side in an extrusion direction, details will be described later, and the smooth surface 25b smooths a surface of the deposited layer 15 when compressing the deposited layer 15.

In the three-dimensional additive manufacturing device 100 having the above configuration, the filament 11 is supplied while the hot end 13 is moved in a plane parallel to the table 17. Accordingly, the melted filament is extruded from the nozzle 25 at the tip end, and the deposited layer 15 is formed on the table 17. After the deposited layer 15 is formed, the table 17 is lowered to allow a second layer, a third layer, and the like to form thereon sequentially, thereby producing a three-dimensional manufactured object. Note that a form of the three-dimensional additive manufacturing device 100 is not limited to this. For example, a configuration in which the table 17 moves instead of the hot end 13, or a configuration in which both the hot end 13 and the table 17 move, may be used.

### <Filament>

The filament 11 may use a fiber reinforced resin filament in which a fiber for reinforcement is impregnated into a base material containing a thermoplastic resin. The filament 11 is used as a manufacturing material by the three-dimensional additive manufacturing device 100, and includes the base material containing a thermoplastic resin, and a single fiber extending in an axial direction or a fiber bundle including a plurality of fibers, the single fiber or the fiber bundle being impregnated in the base material. Here, a case where the fiber bundle including a plurality of fibers is used will be described. The fiber bundle may be twisted along the above axial direction.

### (Base Material)

The base material of the filament 11 contains a thermoplastic resin as a main component. The above base material is capable of being impregnated with the above fiber bundle in a melted state. Examples of the thermoplastic resin include a polyolefin-based resin such as polypropylene and polyethylene, a polyamide-based resin such as nylon, a polyester-based resin such as polyethylene terephthalate (PET) and polybutylene terephthalate (PBT), a polyimide-based resin such as polyethylene imide (PEI), a polyamide-based resin such as nylon, a polycarbonate-based resin, polyether ether ketone (PEEK), polyacetal, and polyphenylene sulfide.

A lower limit of a content (impregnation amount) of the base material in the filament 11 (100 mass%) is preferably 2 mass%, and more preferably 5 mass%. The above content satisfies this lower limit, so that a decrease in an impact strength of the filament 11 can be prevented. On the other hand, an upper limit of the content is preferably 98 mass%, and more preferably 95 weight%. The above content satisfies this upper limit, so that an operability of the filament 11 is improved.

### (Fiber Bundle)

The fibers of the filament 11 are long fibers, that is, continuous fibers. An average length of the above fibers is preferably 2 mm or more, and more preferably 5 mm or more. On the other hand, an upper limit of the average length of the fibers is not particularly limited. This upper limit can be appropriately set to a length such as 1000 m or 500 m.

A lower limit of an average diameter of the above fibers is preferably 1 µm, and more preferably 10 µm. A thickness satisfies the above lower limit, so that sufficient impact strengths of the filament 11 and the three-dimensional manufactured object can be ensured. On the other hand, an upper limit of the average diameter is preferably 10 mm, and more preferably 5 mm. The above average diameter satisfies the above upper limit, so that the filament 11 becomes easier to bend, and a manufactured object becomes easier to manufacture.

A lower limit of an average thickness of the fibers is preferably 10 tex, more preferably 20 tex, and even more preferably 30 tex. The above average thickness satisfies the above lower limit, so that sufficient impact strengths of the filament 11 and the manufactured object can be ensured. On the other hand, an upper limit of the average thickness is preferably 100000 tex, more preferably 60000 tex, and even more preferably 40000 tex. The above average thickness satisfies the above upper limit, so that the filament 11 becomes easier to bend, and a manufactured object becomes easier to manufacture.

Examples of the above fiber include, a carbon fiber, a glass fiber, an organic synthetic resin such as aramid, and a metal fiber such as steel wire. Among those, the carbon fiber is preferred as the above fiber. Since the carbon fiber has higher strength among fiber materials, the filament 11 becomes difficult to buckling, and has improved operability. In addition, by using the carbon fiber, which has higher strength among fibers, the impact strength of the manufactured object is increased.

### <Method for Manufacturing Filament>

The filament 11 containing a fiber or a fiber bundle used in the present embodiment is produced by an impregnation step of impregnating the fiber or fiber bundle into the base material in a melted state. The fiber or fiber bundle may be twisted. In that case, the filament 11 is produced by a manufacturing step including the above impregnation step and a twisting step of twisting the impregnated fiber or fiber bundle.

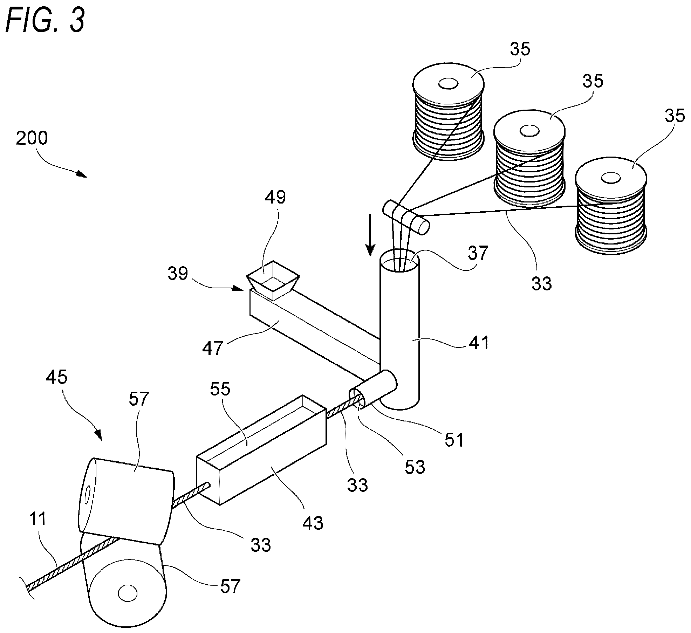

FIG. 3 is a schematic configuration diagram of a filament manufacturing device 200. The shown filament manufacturing device 200 includes a plurality of (three in FIG. 3) fiber material supply units 35 that feed a fiber material 33 wound in a coil shape at a predetermined speed, a kneading extruder 39 that kneads and melts the base material 37, and a resin bath unit 41 that impregnates the fiber material 33 fed from the fiber material supply units 35 with the base material 37 plasticized by the kneading extruder 39.

The filament manufacturing device 200 further includes a cooling unit 43 that is disposed at a downstream side of the resin bath unit 41 and cools the impregnated fiber material 33 fed from the resin bath unit 41, and a twisting unit 45 that is disposed at a downstream side of the cooling unit 43 and mainly twists the fiber material 33 before cooling around an axis. The twisting unit 45 may be omitted if the above twisting step is not performed.

The kneading extruder 39 is rotatably provided with a screw shaft (not shown) having a kneading blade in a chamber 47 having a cavity therein, and melts and plasticizes the base material 37 fed from a hopper 49.

The resin bath unit 41 is formed in a cylindrical shape with a cylinder-axial direction extending up and down, and the base material 37 plasticized by the kneading extruder 39 is supplied and stored inside the cylinder. An upper end portion of the resin bath unit 41 is opened, and the fiber material 33 may be drawn into the base material 37 stored in the resin bath unit 41 from the upper end opening.

Although not shown, inside the resin bath unit 41, a plurality of (for example, four) impregnation rollers, which are rotatably held with axes thereof oriented in a horizontal direction, are arranged parallel to each other and spaced apart by a predetermined distance in an up-down direction. The fiber material 33 is introduced from the upper end opening of the resin bath unit 41 and is sequentially passed over the impregnation rollers in a serpentine manner from top to bottom.

At a lower end portion of the resin bath unit 41, an outlet portion 51 for drawing out the impregnated fiber material 33 to the outside is provided. The outlet portion 51 is provided with a die 53 for shaping the base material 37 while covering the fiber material 33 to form a cross-sectional shape.

The cooling unit 43 is a water tank elongated in a direction in which the impregnated fiber material 33 is drawn out from the resin bath unit 41, and cooling water 55 is stored in the tank. An inlet portion for introducing the impregnated fiber material 33 is provided in a tank wall that is closest to and faces the outlet portion 51 (die 53) of the resin bath unit 41, and an outlet portion for discharging the impregnated fiber material 33 is provided in a tank wall that is farthest from the inlet portion. In the cooling unit 43, the base material 37 impregnated with and covering the fiber material 33 may be cooled and cured in the cooling water 55. If a twist is not to be formed in the filament 11, the cured base material 37 is taken out as the filament 11. If the twist is to be formed in the filament 11, the base material 37 is fed to the twisting unit 45.

As the twisting unit 45 disposed at the downstream side of the cooling unit 43, various mechanisms and the like may be employed. For example, although not shown, a mechanism that rotates a bobbin for winding the filament 11 about an axis of the filament 11 can be employed as the twisting unit 45. As shown in FIG. 3, a configuration including a pair of upper and lower take-up rollers 57 with outer peripheral surfaces thereof brought into contact with each other may be employed as the twisting unit 45. The take-up rollers 57 are rotatable in mutually different rotation directions such that the impregnated fiber material 33 fed from the cooling unit 43 is sandwiched in an opposed manner and further fed to the downstream side.

That is, the take-up rollers 57 have a function of drawing the fiber material 33 from the fiber material supply unit 35 to the resin bath unit 41, and further drawing the impregnated fiber material 33 from the resin bath unit 41 to the cooling unit 43 and the twisting unit 45. A winding unit (not shown) may be separately provided at a downstream side of the twisting unit 45 to wind the obtained filament 11 on a bobbin or the like.

The impregnation step and the twisting step using the filament manufacturing device 200 having the above configuration are performed as follows.

### (Impregnation Step)

The impregnation step is performed by the resin bath unit 41. Specifically, the base material 37 supplied from the hopper 49 is kneaded in the kneading extruder 39, and the base material 37 in a melted state is stored in the resin bath unit 41. The fiber material 33 is supplied to the resin bath unit 41 from the fiber material supply unit 35. In the resin bath unit 41, the fiber material 33 is impregnated in the base material 37 in the melted state, and passes through the die 53 to adjust the impregnation amount. The impregnation results in a state in which the base material 37 exists in a gap in each fiber material 33, present around each fiber material 33, and present between the fiber materials 33. A composite (impregnated fiber material) of the base material 37 and the fiber material 33 obtained in this way is cooled in the cooling unit 43.

### (Twisting Step)

In the twisting step, the twisting is applied by the twisting unit 45 to the fiber material 33 impregnated with the base material 37 by the resin bath unit 41. Specifically, the impregnated fiber material 33 that passes through the cooling unit 43 passes through nips of the take-up rollers 57 of the twisting unit 45 while these rollers rotate. Accordingly, as described above, the twisting is applied to the impregnated fiber material 33 (that is, in an impregnated state) at least on a downstream side of the lowermost impregnation roller (not shown) in the resin bath unit 41. The number of times of twisting and a twist angle can be adjusted by adjusting an inclination angle of the take-up rollers 57 relative to a take-up direction.

In this way, the filament 11 in which a base material containing a thermoplastic resin is impregnated with a fiber material, and twisting is applied in an axial direction can be manufactured.

### <Manufacturing Method>

Next, a manufacturing method for manufacturing a three-dimensional manufactured object using the filament 11 described above by the three-dimensional additive manufacturing device 100 shown in FIG. 1 will be described in detail.

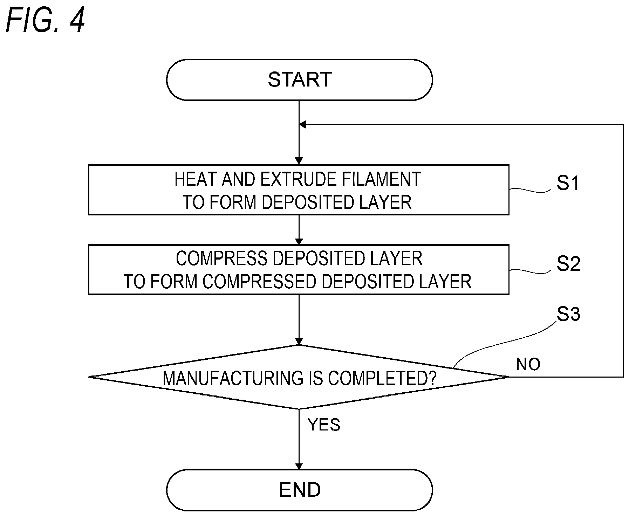

FIG. 4 is a flowchart showing a procedure of the manufacturing method of the present embodiment. In order to manufacture a three-dimensional manufactured object of the desired shape, first, the filament 11, fed by the feed roller 19 shown in FIG. 1, is guided through the heatsink 31, the heat break 29, and the heat block 27 of the hot end 13 to the nozzle 25. Then, the heat block 27 heats the nozzle 25 to melt the filament 11 inside the nozzle 25. By rotating the feed roller 19 to feed the filament 11 towards the nozzle 25, the melted filament is extruded from the extrusion port 25a (FIG. 2) at the tip end of the nozzle 25.

The extruded melted filament is deposited on an upper surface (extrusion target surface) 17a of the table 17 shown in FIG. 1 to form the deposited layer 15 (S1). The deposited layer 15 is formed in a pattern along a pass (movement path of the nozzle 25) predetermined according to a shape of a three-dimensional manufactured object to be manufactured. The above step of forming the deposited layer 15 is also referred to as a "first step" in the following description.

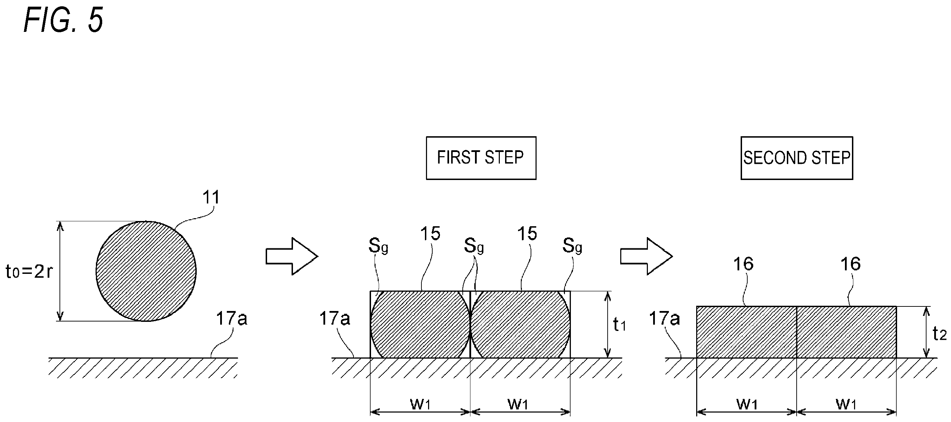

After the first step described above, the formed deposited layer 15 is compressed (S2). This step is also referred to as a "second step" in the following description. In the second step, the deposited layer 15 is heated and pressurized in a thickness direction to form a compressed deposited layer 16 (see FIG. 5 to be described later) by compressing the deposited layer 15. By repeating the first step and the second step, the three-dimensional manufactured object having a desired shape is manufactured (S3). When repeating the first step and the second step, the extrusion target surface when the deposited layer 15 is formed again by the first step on the compressed deposited layer becomes an underlying compressed deposited layer.

FIG. 5 is a step illustration diagram schematically showing a process executed by the first step and the second step. A thickness t₀ of the filament 11 is expressed as 2r if r represents a radius of a circular cross-section perpendicular to a longitudinal direction of the filament 11 in the non-melted state (original state). In the first step, the filament 11 is heated and extruded from the nozzle 25 to form the deposited layer 15 on the extrusion target surface 17a. A thickness of the deposited layer 15 is defined as t₁. The thickness t₁ of the deposited layer 15 can be precisely set by adjusting a height from the extrusion target surface 17a to the extrusion port 25a of the nozzle 25. In the deposited layer 15, the extruded filament 11 is extended within the thickness t₁ and to a width w₁ on the extrusion target surface 17a while maintaining an equal cross-sectional area in the cross section perpendicular to the longitudinal direction of the filament 11. In this state, a void Sg other than the filament 11 exists in a rectangular cross-sectional region having the thickness t₁ and width w₁.

In the second step, the formed deposited layer 15 is further compressed in the thickness direction to eliminate or reduce the void Sg generated in the first step, thereby forming the compressed deposited layer 16. That is, all or substantially all of the rectangular cross-sectional region having the thickness t₁ and width w₁ is filled with the filament 11. Note that when compressing the deposited layer 15 in the second step, another deposited layer 15 from an adjacent pass is actually disposed next to the deposited layer 15 being compressed (only two rows of deposited layers 15 are shown in FIG. 5). Therefore, when the compression is performed in the second step, the compressed deposited layer 16 is constrained in an arrangement direction (lateral width direction in FIG.5) of the deposited layers 15 with the adjacent deposited layers 15 as a barrier. Even if there is a gap between the deposited layer 15 and the adjacent deposited layer 15, the compressed deposited layer 16 is constrained with the adjacent deposited layer 15 as a barrier when the deposited layer 15 is compressed in the second step and comes into contact with the adjacent deposited layer 15. Accordingly, the deformation of the deposited layer 15 to become the compressed deposited layer 16 mainly occurs in a height direction of the deposited layer 15, but may also occur slightly in the lateral width direction.

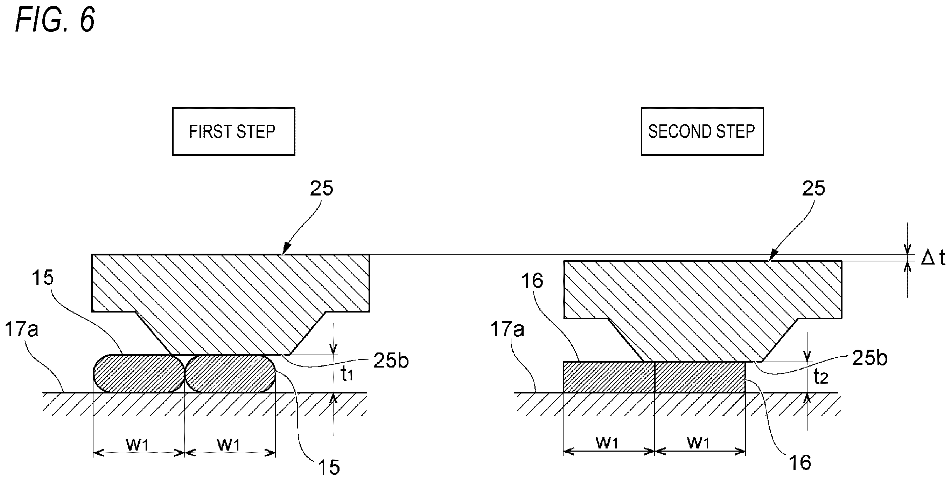

FIG. 6 is a step illustration diagram schematically showing a mode in which the compressed deposited layer 16 is formed by changing a head height in the first step and the second step. As described above, the thickness t1 of the deposited layer 15 in the first step is set by adjusting a nozzle height from the extrusion target surface 17a. In the second step, the nozzle 25 is lowered by Δt from the nozzle height in the first step, and the nozzle height from the extrusion target surface 17a is further reduced. Accordingly, a thickness t₂ of the compressed deposited layer 16 becomes smaller than the thickness t₁ of the deposited layer 15.

In the second step, the extrusion of the filament 11 from the nozzle 25 is stopped, and the nozzle height is lowered while the nozzle 25 is heated, and the nozzle 25 moves above (moves relative to) the existing deposited layer 15. For example, the nozzle 25 may be moved along the same pass as in the first step, or along a predetermined path, or may be scanned along two orthogonal axes along the extrusion target surface 17a. In this way, the existing deposited layer 15 is heated to achieve fluidity, and the thickness of the deposited layer 15 is regulated by the nozzle height, which can be uniformly applied to the entire existing deposited layer 15.

Accordingly, the deposited layer 15 is pressed by the smooth surface 25b of the heated nozzle 25 while being constrained in the arrangement direction by the adjacent deposited layer 15. Therefore, in the deposited layer 15, the resin and the fiber contained in the filament 11 become fluid due to heating, and the distribution of the fiber in the layer becomes more uniform. A surface of the compressed deposited layer 16 is smoothed by the relative movement between the nozzle 25 and the deposited layer 15, resulting in a smooth surface with the void Sg eliminated or reduced. As a result, the compressed deposited layer 16 after the second step becomes a layer having a size equal to or approximately equal to a volume of the supplied filament 11 and having a smooth surface, and approaches an ideal state where void Sg does not exist in the compressed deposited layer 16. Therefore, by repeatedly depositing such a compressed deposited layer 16, the three-dimensional manufactured object having a desired shape can be formed with higher precision and higher strength. Moreover, since the distribution of the fiber in the compressed deposited layer 16 is equalized, the strength of the three-dimensional manufactured object can be further improved.

Effects of surface smoothing and equalization of fiber distribution described above can also be obtained by performing only the first step when the thickness of the deposited layer 15 is compressed to a predetermined thickness in the first step. The smooth surface 25b of the nozzle 25 is a smooth flat surface or a convex curved surface, so that the surface of the deposited layer 15 can be kept at a small surface roughness. That is, defects such as gaps (grooves, scratches) in a surface layer of the compressed deposited layer 16 can be prevented from being generated.

The thickness t₁ of the deposited layer 15 formed in the first step is sufficient to be compressed to a thickness that is 40% or more of the diameter before extrusion (2r) of the filament 11, and smaller than the diameter before extrusion of the filament 11, and preferably compressed to a thickness of 50% or more, more preferably 60% or more, and even more preferably 70% or more. Accordingly, a smoothing effect of the surface of the deposited layer 15 can be further improved. As described above, depending on the type of the filament 11 and conditions of the first step, the compression of the deposited layer 15 in the second step can be omitted, and in this case, a manufacturing takt time can be shortened.

Processes, such as a control of the nozzle height, the nozzle temperature, the nozzle movement, and the like, a temperature control of the table 17, and the feeding control of the filament 11 during the above manufacture, are performed by executing a program input to the control unit 23 shown in FIG. 1, or by executing a program created by the control unit 23 or another computer based on input such as manufacturing shape data and driving condition data.

The compression of the deposited layer 15 in the second step can be easily performed using the nozzle 25 that extrudes the filament 11, without a separate heating and pressurizing mechanism. Furthermore, a heating and pressurizing block for the second step may be provided around the nozzle 25, separate from one for filament extrusion. In that case, the heating and pressurizing block can be made into a more suitable shape by compressing the deposited layer 15 in the second step, and the compressed deposited layer 16 can be formed with high freedom and efficiency.

Next, details of the height control of the nozzle 25 in the first step and the second step will be described.

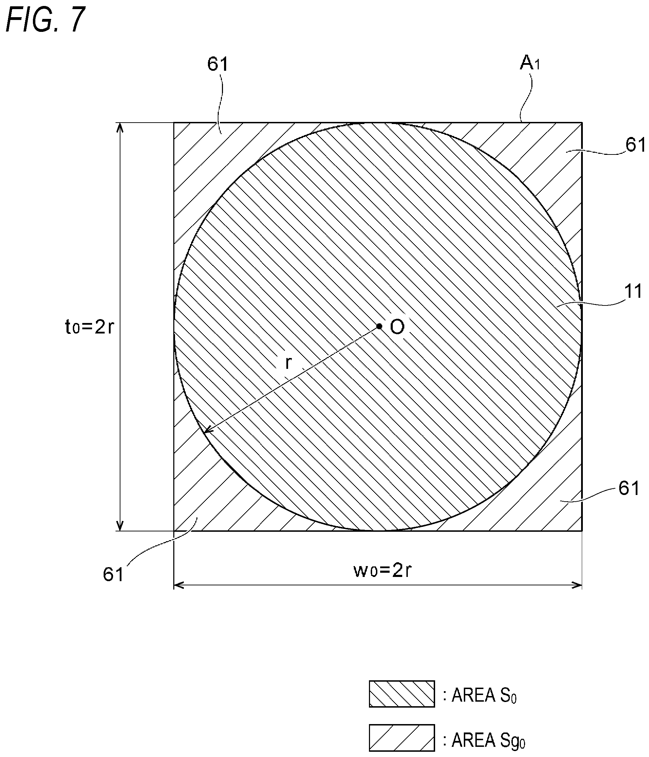

FIG. 7 is a schematic diagram showing a cross-sectional shape perpendicular to the longitudinal direction of the filament 11 to be supplied. The filament 11 has a circular cross section with a radius r from a center O. If the shape of the filament 11 is reproduced as is on the extrusion target surface, the thickness t₀ and a width (width in arrangement direction of a plurality of passes) w₀ of the deposited layer formed in one pass are both 2r. That is, a region A₁ (t₀ × w₀) represented by a rectangle circumscribing a circle with radius r becomes an occupied cross-sectional area of one pass of the deposited layer. In the following description, the cross-sectional area is simply referred to as "area". Here, an area of the filament 11 is defined as S₀, and a total area of voids 61 other than the filament 11 in the region A1 is defined as S_{g0}.

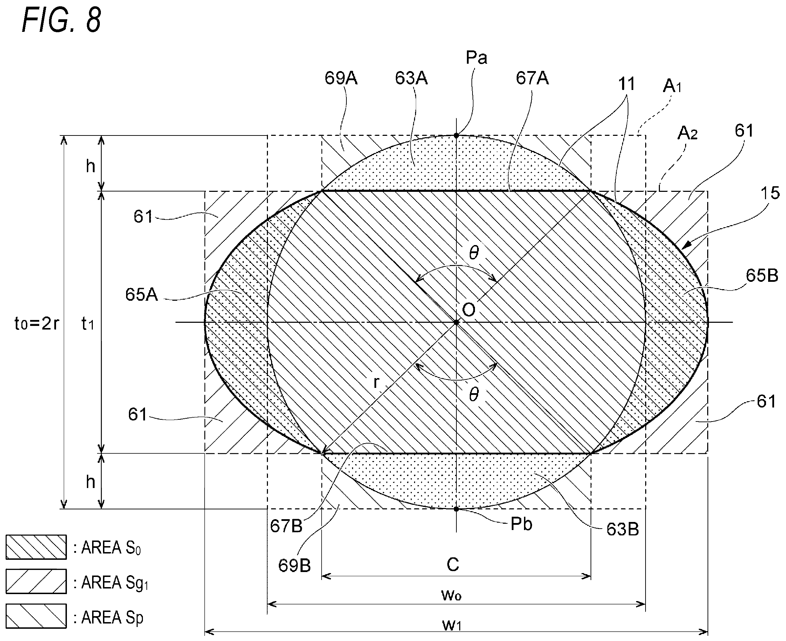

FIG. 8 is an illustration diagram schematically showing a state of the filament 11 shown in FIG. 7 compressed in the first step. FIG. 8 also corresponds to the deposited layer 15 in the first step shown in FIG. 5. When the filament 11 is extruded from the nozzle 25 onto the extrusion target surface with the nozzle height set to t₁ in the first step, the deposited layer 15 is formed on the extrusion target surface. Here, in a region A₂ (t₁ × w₁) represented by a rectangle circumscribing the deposited layer 15 formed in one pass, the area S₀ occupied by the filament 11 remains unchanged, and thus, the deposited layer 15 expands from the width w₀ to a width w₁. An outer edge shape of the filament 11 shown by a thick line in FIG. 8 is such that a total area of arc-shaped disappearing regions 63A and 63B where an original shape of the filament 11 shown by a dashed line is crushed and disappears is equal to a total area of widened regions 65A and 65B that are generated by widening from the original shape of the filament 11. Accordingly, the area S₀ of the filament 11 is kept constant before and after the deformation due to the extrusion. The shape of the deformed filament 11 shown by the thick line is not necessarily the actual deformed shape, but is a schematic shape for simplification of the description.

A total area Sg₁ of the voids 61 included in the region A2 after the first step is smaller than the area Sg₀ of the voids 61 before the first step shown in FIG. 7. This is because the filament 11 is compressed in the thickness direction and widened in the first step, so that the region of the voids 61 is filled with the filament 11. A decrease in the area of the voids 61 in this case can be approximately calculated as follows.

Here, a chord of the disappearing region 63A of the filament 11 is defined as 67A, a height from an uppermost point Pa of the original shape of the filament 11 to the chord 67A is defined as h, and a rectangular region is drawn with the chord 67A as a long side and sides of height h from both ends of the chord 67A as short sides. A remaining part of this rectangular region after removing the disappearing region 63A is defined as a region 69A. Here, a chord of the disappearing region 63B of the filament 11 is defined as 67B, a height from a lowest point Pb of the original shape of the filament 11 to the chord 67B is defined as h, and a rectangular region is drawn with the chord 67B as a long side and sides of height h from both ends of the chord 67B as short sides. A remaining part of this rectangular region after removing the disappearing region 63B is defined as a region 69B. It is considered that a total area of the above region 69A and region 69B is an area Sp, which corresponds to the decrease in the area of the voids 61 before and after the first step.

As a result, the total area Sg₁ of the voids 61 formed at four corners of the region A₂ shown in FIG. 8 is an area obtained by subtracting the total area Sp of the regions 69A and 69B from the total area Sg₀ of the voids 61 in the original filament 11 shown in FIG. 7. Once the total area Sg₁ of the voids 61 is obtained, the width w₁ of the region A₂ remains the same, and the thickness that makes the area Sg₁ zero, that is, the thickness that eliminates the voids 61, can be obtained. This thickness becomes the nozzle height set in the second step, that is, t₂.

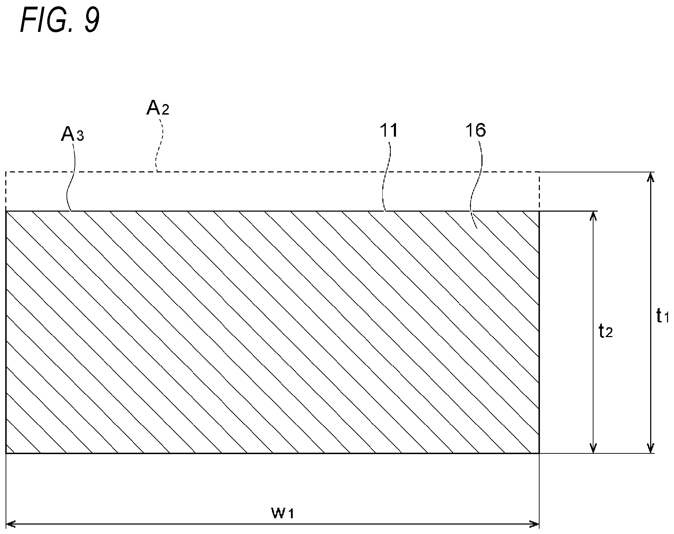

FIG. 9 is an illustration diagram schematically showing the compressed deposited layer 16 formed by compressing the deposited layer 15 in the second step. FIG. 9 also corresponds to the compressed deposited layer 16 in the second step shown in FIG. 5. The thickness t₂ of the compressed deposited layer 16 is achieved by compressing the deposited layer 15, formed in the first step, from the thickness t₁ to the thickness t₂, which is obtained by eliminating the voids 61, by a pressure of the nozzle 25. Instead of the value obtained by completely eliminating the voids 61, the thickness t₂ may be reduced to a level without any significant problems.

Next, specific mathematical formulas for calculating a set height of the nozzle 25 set in the second step, which eliminates the voids 61 described above, will be described. Here, r, x, and Sp are defined as follows.
r: radius [mm] of filament
x: ratio (t₁/t₀) of thickness t₁ [mm] of deposited layer when formed to filament diameter t₀ (= 2r) [mm]
Sp: area [mm²] of void reduced by compressing deposited layer to compressed deposited layer.

Then, the thickness t₁ of the deposited layer 15 in the first step, the height h of the arc-shaped disappearing regions 63A and 63B, a length c of the chords 67A and 67B, an central angle θ of an arc, and an area S of each of the disappearing regions 63A and 63B are represented by Formulas (1) to (5).$\begin{matrix}{t}_{1} = 2 rx \left(1\right) \\ h = r \left(1-x\right) \left(2\right) \\ c = 2 \sqrt{h \left(2r-h\right)} \left(3\right) \\ θ = 2 {cos}^{- 1} \left(1-\frac{h}{r}\right) \left(4\right) \\ S = \frac{θ}{2} {r}^{2} - \left(r-h\right) \sqrt{h \left(2r-h\right)} \left(5\right)\end{matrix}$

The total area Sp of the regions 69A and 69B corresponds to the decrease in the area of the voids 61 before and after the first step, and is represented by Formula (6). The width w₁ of the filament 11 that is widened in the first step is represented by Formula (7), and the thickness t₂ required to eliminate the voids 61 in the second step is represented by Formula (8).$\begin{matrix}{S}_{p} = 2 \left(hc-S\right) \left(6\right) \\ {w}_{1} ≧ \frac{4 {r}^{2} - {S}_{p}}{2 rx} \left(7\right) \\ {t}_{2} ≦ \frac{2 {πr}^{3} x}{4 {r}^{2} - {S}_{p}} \left(8\right)\end{matrix}$

That is, when a melted filament is extruded from a nozzle to form a three-dimensional manufactured object by a deposited layer with a thickness set by a ratio x, the widths w₁ of the deposited layer formed in the first step and the compressed deposited layer formed in the second step are set based on Formula (7). Then, even if the filament is deformed by the compression, a deposited layer with an ideal width that reliably ensures a total cross-sectional area of the filament is obtained. Furthermore, by setting the thickness t₂ of the compressed deposited layer formed in the second step based on Formula (8), the compressed deposited layer can be formed with the voids therein eliminated or reduced. Accordingly, an increase in porosity of a manufactured object can be prevented, and a high-quality manufactured object can be formed even when a diameter of a filament increases or a fiber content of the filament increases.

### Examples

A plurality of types of fiber reinforced resin filaments with different fiber content and diameters were prepared as filaments for use in a three-dimensional additive manufacturing device, these filaments were loaded into the three-dimensional additive manufacturing device 100 shown in FIG. 1, surface properties when forming the deposited layer 15 and compressed deposited layer 16 as described above were evaluated, and the results thereof were described. Table 1 summarizes manufacturing conditions and manufacturing and evaluation results for Test Examples 1 to 15.

**[Table 1]**

| | Contained fiber | Set layer width [mm] | Set layer height [mm] | Thickness ratio x [%] in first step | Deposited layer thickness [mm] after first step | Surface roughness Sz [µm] | | Evaluation |
|---|---|---|---|---|---|---|---|---|
| | | | | | | Perform first and second steps | Perform first step only | |
| Test Example 1 | 3K Φ0.7 | 0.93 | 0.41 | 70 | 0.49 | 263 | 269 | A |
| Test Example 2 | | 1.05 | 0.37 | 60 | 0.42 | 242 | 274 | A |
| Test Example 3 | | 1.22 | 0.31 | 50 | 0.35 | 258 | 325 | A |
| Test Example 4 | | 1.48 | 0.26 | 40 | 0.28 | 265 | 357 | A |
| Test Example 5 | 6K Φ1.0 | 1.33 | 0.59 | 70 | 0.70 | 391 | 481 | A |
| Test Example 6 | | 1.51 | 0.52 | 60 | 0.60 | 261 | 386 | A |
| Test Example 7 | | 1.75 | 0.45 | 50 | 0.50 | 260 | 807 | A |
| Test Example 8 | | 2.11 | 0.37 | 40 | 0.40 | 271 | 754 | A |
| Test Example 9 | 12K Φ1.1 | 1.47 | 0.65 | 70 | 0.77 | 384 | 482 | A |
| Test Example 10 | | 1.66 | 0.57 | 60 | 0.66 | 308 | 536 | A |
| Test Example 11 | | 1.92 | 0.49 | 50 | 0.55 | 395 | 609 | A |
| Test Example 12 | | 2.33 | 0.41 | 40 | 0.44 | 480 | 587 | A |
| Test Example 13 | 3K Φ0.7 | 2.74 | 0.29 | 30 | 0.30 | 1071 | 1313 | B |
| Test Example 14 | 6K Φ1.0 | 3.01 | 0.32 | 30 | 0.33 | 1031 | 1199 | B |
| Test Example 15 | 12K Φ1.1 | 1.92 | 0.20 | 30 | 0.21 | 597 | 1241 | B |

### (Test Examples 1 to 4)

Test Examples 1 to 4 used fiber reinforced resin filaments (cross-sectional diameter φ0.7 mm) with a fiber content of 40 mass%. The filament included a polyamide base material, which was a thermoplastic resin, and a fiber bundle of TR30S3L (manufactured by Mitsubishi Chemical Corporation, 3000 fibers) as fibers for reinforcement.

Each of test pieces was manufactured under conditions where a nozzle temperature at the hot end was 260°C, a table temperature was 60°C, and a manufacturing speed was 3 mm/sec to 5 mm/sec, and a deposited layer with 50 mm in the longitudinal direction was formed by reciprocating five times in the width direction perpendicular to the longitudinal direction.

As described above, the filament was extruded from the nozzle while being subjected to a heating and pressurizing treatment to form the deposited layer (first step), and after forming the deposited layer, this deposited layer was subjected to the heating and pressurizing treatment without filament extrusion by the nozzle (second step). A thickness of the deposited layer in the second step was set to 70%, 60%, 50%, and 40% of a cross-sectional diameter of the filament before the extrusion, respectively. The thickness t₂ and width w₁ (FIG. 9) of the compressed deposited layer at the end of the second step were set based on Formulas (1) and (2). The heating and pressurizing treatment in the second step was performed using the nozzle of the hot end along a manufacturing pass or a predetermined path at any speed (3 mm/sec to 50 mm/sec).

A surface roughness (surface roughness (maximum height Sz): in accordance with ISO 25178) of the three-dimensional manufactured object, which was produced by the above settings of the deposited layer and the compressed deposited layers and the two-step process, was measured using a laser microscope. In addition to the surface roughness under conditions where the two-step process including the first step and the second step was performed, Table 1 also showed results of the surface roughness under conditions where the second step was not performed and a final thickness was set directly in the first step only, and whether a smoothing effect was observed was evaluated. The evaluation results were indicated as "A" if the smoothing effect was observed, and were indicated as "B" if it the smoothing effect was not observed.

### (Test Examples 5 to 8)

Test Examples 5 to 8 used fiber reinforced resin filaments (cross-sectional diameter φ1.0 mm) with a fiber content of 40 mass%. The filament included a polyamide base material, which was a thermoplastic resin, and a fiber bundle of PYROFILTR50S6L (manufactured by Mitsubishi Chemical Corporation, 6000 fibers) as fibers for reinforcement. Each of test pieces was manufactured and evaluated in the same manner as that in Test Examples 1 to 4.

### (Test Examples 9 to 12)

Test Examples 9 to 12 used fiber reinforced resin filaments (cross-sectional diameter φ1.1 mm) with a fiber content of 65 mass%. The filament included a polyamide base material, which was a thermoplastic resin, and a fiber bundle of TR50S12L (manufactured by Mitsubishi Chemical Corporation, 12000 fibers) as fibers for reinforcement. Each of test pieces was manufactured and evaluated in the same manner as that in Test Examples 1 to 4.

### (Test Examples 13 to 15)

Test Example 13 used the fiber reinforced resin filament used in Test Examples 1 to 4, and set the thickness of the deposited layer in the second step to 30% of a cross-sectional diameter of the filament. Test Example 14 used the fiber reinforced resin filament used in Test Examples 5 to 8, and set the thickness of the deposited layer in the second step to 30% of a cross-sectional diameter of the filament. Test Example 15 used the fiber reinforced resin filament used in Test Examples 9 to 12, and set the thickness of the deposited layer in the second step to 30% of a cross-sectional diameter of the filament. Each of test pieces was manufactured and evaluated in the same manner as that in Test Examples 1 to 4.

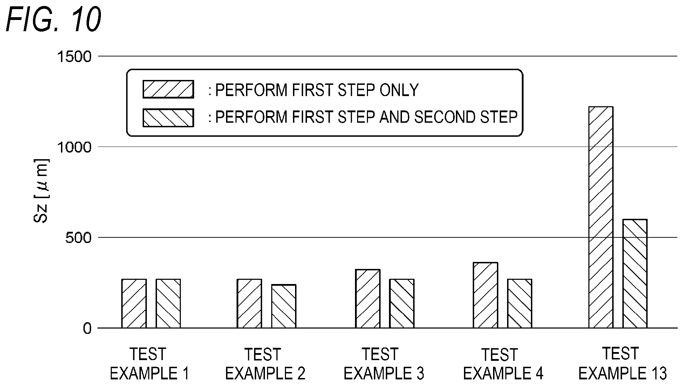

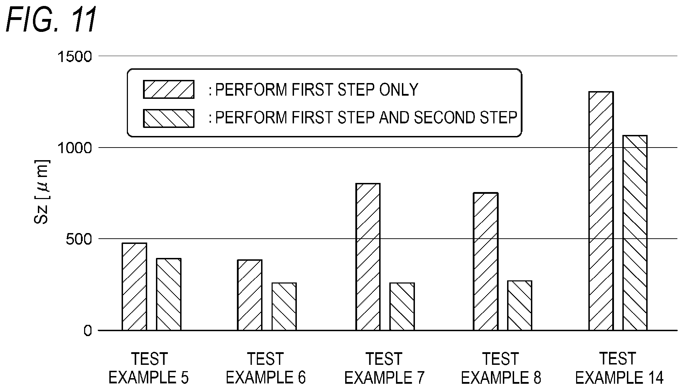

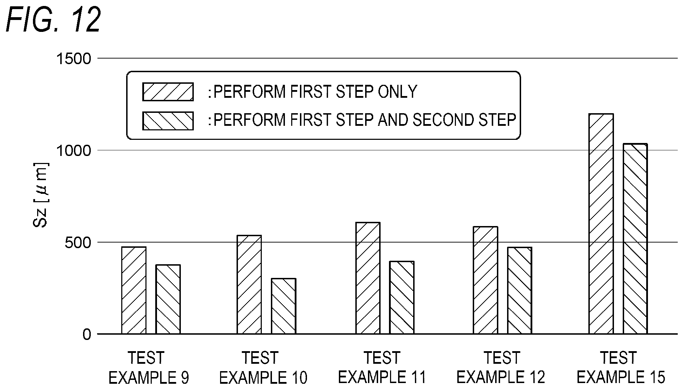

FIG. 10 is a graph showing the surface roughness Sz in Test Examples 1 to 4 and Test Example 13. FIG. 11 is a graph showing the surface roughness Sz in Test Examples 5 to 8 and Test Example 14. FIG. 12 is a graph showing the surface roughness Sz in Test Examples 9 to 12 and Test Example 15. FIGS. 10 to 12 show the results when only the first step was performed and when both the first step and the second step were performed.

As shown in Test Examples 1 to 12, three types of filaments with different fiber contents and diameters all showed a surface smoothing effect on the compressed deposited layer when the two-step process including the first step and the second step was performed. The two-step process achieved a higher surface smoothing effect than that when only the first step was performed.

On the other hand, in the case of performing the two-step process, Test Examples 13 and 14 in which the thickness ratio x of the deposited layer in the first step was set to 30% showed approximately four times the surface roughness Sz compared to Test Examples 4 and 8 in which the thickness ratio x was set to 40%. Test Example 15 in which the thickness ratio x was set to 30% showed increased surface roughness Sz compared to Test Example 12 in which the thickness ratio x was set to 40%. Therefore, it is considered desirable to set the thickness ratio x to 40% or more.

As described above, the present invention is not limited to the above embodiments, and combinations of the respective configurations of the embodiments and changes and applications made by those skilled in the art based on the description of the specification and well-known techniques are also intended for the present invention and are included in the scope of protection.

As described above, the present specification discloses the following matters.
(1) A method for manufacturing a three-dimensional manufactured object using, as a manufacturing material, a fiber reinforced resin filament in which a base material containing a thermoplastic resin is impregnated with at least one fiber or fiber bundle, the method including:
   a first step of heating the fiber reinforced resin filament and extruding the heated fiber reinforced resin filament onto an extrusion target surface to form a deposited layer of the fiber reinforced resin filament on the extrusion target surface, in which
   in the first step, a thickness of each layer of the deposited layer is formed to be 40% or more of a diameter before extrusion and smaller than the diameter before extrusion of the fiber reinforced resin filament.
   According to the method for manufacturing a three-dimensional manufactured object, by forming the thickness of the deposited layer to be 40% or more of the diameter before extrusion and smaller than the diameter before extrusion of the fiber reinforced resin filament, distribution of fibers within the deposited layer becomes more uniform by a flow of resin and fibers, accompanied by variations in the thickness of the deposited layer. Accordingly, a strength of the three-dimensional manufactured object can be improved. A void in the deposited layer is reduced and a surface of the deposited layer is smoothed, and thus, the three-dimensional manufactured object can be formed with high precision and high strength.
(2) The method for manufacturing a three-dimensional manufactured object according to (1), further including:
   a second step of heating the deposited layer formed in the first step, and applying a pressure in a thickness direction of the deposited layer to form a compressed deposited layer in which a thickness of each layer of the deposited layer is made smaller than the thickness of each layer of the deposited layer when formed.
   According to the method for manufacturing a three-dimensional manufactured object, the compressed deposited layer is formed in the second step after the first step, and thus, the distribution of fibers within the compressed deposited layer becomes more uniform, and the surface is further smoothed, and thus, the three-dimensional manufactured object can be formed with higher precision and higher strength.
(3) The method for manufacturing a three-dimensional manufactured object according to (2), in which
   in the second step, the compressed deposited layer is formed by compressing the deposited layer to a thickness obtained by eliminating a void other than the fiber reinforced resin filament contained within a thickness of the deposited layer, or to a thickness obtained by reducing the void.
   According to the method for manufacturing a three-dimensional manufactured object, the compressed deposited layer becomes a layer having a size equal to a volume of the supplied filament and having a smoothed surface, and approaches an ideal state where there are no voids in the compressed structural layer.
(4) The method for manufacturing a three-dimensional manufactured object according to (3), in which
   a width w₁ of the deposited layer formed in one pass in the first step in a direction perpendicular to the pass on the extrusion target surface, and a thickness t₂ of the compressed deposited layer formed in the second step are set based on the following formula:
      $\begin{matrix}{w}_{1} ≧ \frac{4 {r}^{2} - {S}_{p}}{2 rx} , {t}_{2} ≦ \frac{2 {πr}^{3} x}{4 {r}^{2} - {S}_{p}} \\ {S}_{p} = 2 \left(hc-S\right) , h = r \left(1-x\right) , c = 2 \sqrt{h \left(2r-h\right)} \\ θ = 2 {cos}^{- 1} \left(1-\frac{h}{r}\right) , S = \frac{θ}{2} {r}^{2} - \left(r-h\right) \sqrt{h \left(2r-h\right)}\end{matrix}$
      r: radius [mm] of filament
      x: ratio (t₁/t₀) of thickness t₁ [mm] of deposited layer when formed to filament diameter t₀ [mm]
      Sp: area [mm²] of void reduced by compressing deposited layer to compressed deposited layer
      According to the method for manufacturing a three-dimensional manufactured object, the width w₁ and the thickness t₂ of the compressed deposited layer can be precisely set, and the three-dimensional manufactured object can be formed with higher precision and higher strength.
(5) The method for manufacturing a three-dimensional manufactured object according to any one of (2) to (4), in which
   in the first step, the manufacturing material obtained by heating the fiber reinforced resin filament is extruded from a nozzle to form the deposited layer on the extrusion target surface, and
   in the second step, while the heated nozzle is pressed against the deposited layer formed in the first step in the thickness direction of the deposited layer, the nozzle is moved relative to the deposited layer, thereby compressing the deposited layer.
   According to the method for manufacturing a three-dimensional manufactured object, the deposited layer is compressed using the nozzle, and thus, there is no need to provide heating and pressurizing mechanisms separately, and the second step can be performed easily.
(6) The method for manufacturing a three-dimensional manufactured object according to (5), in which
   a thickness of the deposited layer is set by adjusting a height of the nozzle from the extrusion target surface.
   According to the method for manufacturing a three-dimensional manufactured object, the thickness of the deposited layer can be precisely controlled by controlling the height of the nozzle.
(7) The method for manufacturing a three-dimensional manufactured object according to (5), in which
   in the second step, a flat surface or a convex curved surface formed at a tip end of the nozzle and capable of coming into contact with the deposited layer is pressed against the deposited layer.
   According to the method for manufacturing a three-dimensional manufactured object, the surface of the deposited layer can be kept to a small surface roughness.
(8) A program that generates control information for manufacturing a three-dimensional manufactured object using, as a manufacturing material, a fiber reinforced resin filament in which a base material containing a thermoplastic resin is impregnated with at least one fiber or fiber bundle, in which
   the program causes a computer to execute a procedure of, in a first step of heating the fiber reinforced resin filament and extruding the heated fiber reinforced resin filament onto an extrusion target surface to form a deposited layer of the fiber reinforced resin filament on the extrusion target surface, forming a thickness of each layer of the deposited layer to be 40% or more of a diameter before extrusion and smaller than the diameter before extrusion of the fiber reinforced resin filament.
   According to the program, by forming the thickness of the laminated layer to be 40% or more of the diameter before extrusion and smaller than the diameter before extrusion of the fiber reinforced resin filament, distribution of fibers within the deposited layer becomes more uniform by a flow of resin and fibers, accompanied by variations in the thickness of the deposited layer. Accordingly, a strength of the three-dimensional manufactured object can be improved. A void in the deposited layer is reduced and a surface of the deposited layer is smoothed, and thus, the three-dimensional manufactured object can be formed with high precision and high strength.
(9) The program according to (8) that further executes a procedure of a second step of heating the deposited layer formed in the first step, and applying a pressure in a thickness direction of the deposited layer to form a compressed deposited layer in which a thickness of each layer of the deposited layer is made smaller than the thickness of each layer of the deposited layer when formed.
   According to the program, the compressed deposited layer is formed in the second step after the first step, and thus, the distribution of fibers within the compressed deposited layer becomes more uniform, and the surface is further smoothed, and thus, the three-dimensional manufactured object can be formed with higher precision and higher strength.
(10) The program according to (9), in which
   the procedure of the second step includes a procedure of forming the compressed deposited layer by compressing the deposited layer to a thickness obtained by eliminating a void other than the fiber reinforced resin filament contained within a thickness of the deposited layer, or to a thickness obtained by reducing the void.
   According to the program, the compressed deposited layer becomes a layer having a size equal to a volume of the supplied filament and having a smoothed surface, and approaches an ideal state where there are no voids in the compressed structural layer.
(11) The program according to (10), in which
   a width w₁ of the deposited layer formed in one pass in the first step in a direction perpendicular to the pass on the extrusion target surface, and a thickness t₂ of the compressed deposited layer formed in the second step are set based on the following formula:
   $\begin{matrix}{w}_{1} ≧ \frac{4 {r}^{2} - {S}_{p}}{2 rx} , {t}_{2} ≦ \frac{2 {πr}^{3} x}{4 {r}^{2} - {S}_{p}} \\ {S}_{p} = 2 \left(hc-S\right) , h = r \left(1-x\right) , c = 2 \sqrt{h \left(2r-h\right)} \\ θ = 2 {cos}^{- 1} \left(1-\frac{h}{r}\right) , S = \frac{θ}{2} {r}^{2} - \left(r-h\right) \sqrt{h \left(2r-h\right)}\end{matrix}$
   r: radius [mm] of filament
   x: ratio (t₁/t₀) of thickness t₁ [mm] of deposited layer when formed to filament diameter t₀ (= 2r) [mm]
   Sp: area [mm²] of void reduced by compressing deposited layer.

According to the program, the width w₁ and the thickness t₂ of the compressed deposited layer can be precisely set, and the three-dimensional manufactured object can be formed with higher precision and higher strength.

The present application is based on a Japanese Patent Application (Patent Application No. 2023-177464) filed on October 13, 2023, contents of which are incorporated herein by reference.

### REFERENCE SIGNS LIST

11: filament (fiber reinforced resin filament)
13: hot end
15:deposited layer
16: compressed deposited layer
17: table
17a: extrusion target surface
19: feed roller
21: molding driving unit
23: control unit
25: nozzle
25a: extrusion port
25b: smooth surface
27: heat block
29: heat break
31: heatsink
33: fiber material
35: fiber material supply unit
37: base material
39: kneading extruder
41: resin bath unit
43: cooling unit
45: twisting unit
47: chamber
49: hopper
51: outlet portion
53: die
55: cooling water
57: take-up roller
61: void
63A, 63B: disappearing region
65A, 65B: widened region
67A, 67B: chord
100: three-dimensional additive manufacturing device
200: filament manufacturing device

## Claims

1. A method for manufacturing a three-dimensional manufactured object using, as a manufacturing material, a fiber reinforced resin filament in which a base material containing a thermoplastic resin is impregnated with at least one fiber or fiber bundle, the method comprising:
a first step of heating the fiber reinforced resin filament and extruding the heated fiber reinforced resin filament onto an extrusion target surface to form a deposited layer of the fiber reinforced resin filament on the extrusion target surface, wherein
in the first step, a thickness of each layer of the deposited layer is formed to be 40% or more of a diameter before extrusion and smaller than the diameter before extrusion of the fiber reinforced resin filament.

2. The method for manufacturing a three-dimensional manufactured object according to claim 1, further comprising:
a second step of heating the deposited layer formed in the first step, and applying a pressure in a thickness direction of the deposited layer to form a compressed deposited layer in which a thickness of each layer of the deposited layer is made smaller than the thickness of each layer of the deposited layer when formed.

3. The method for manufacturing a three-dimensional manufactured object according to claim 2, wherein in the second step, the compressed deposited layer is formed by compressing the deposited layer to a thickness obtained by eliminating a void other than the fiber reinforced resin filament contained within a thickness of the deposited layer, or to a thickness obtained by reducing the void.

4. The method for manufacturing a three-dimensional manufactured object according to claim 3, wherein
a width w₁ of the deposited layer formed in one pass in the first step in a direction perpendicular to the pass on the extrusion target surface, and a thickness t₂ of the compressed deposited layer formed in the second step are set based on the following formula: $\begin{matrix}{w}_{1} ≧ \frac{4 {r}^{2} - {S}_{p}}{2 rx} , {t}_{2} ≦ \frac{2 {πr}^{3} x}{4 {r}^{2} - {S}_{p}} \\ {S}_{p} = 2 \left(hc-S\right) , h = r \left(1-x\right) , c = 2 \sqrt{h \left(2r-h\right)} \\ θ = 2 {cos}^{- 1} \left(1-\frac{h}{r}\right) , S = \frac{θ}{2} {r}^{2} - \left(r-h\right) \sqrt{h \left(2r-h\right)}\end{matrix}$
r: radius [mm] of filament
x: ratio (t₁/t₀) of thickness t₁ [mm] of deposited layer when formed to filament diameter t₀ [mm]
Sp: area [mm²] of void reduced by compressing deposited layer to compressed deposited layer.

5. The method for manufacturing a three-dimensional manufactured object according to any one of claims 2 to 4, wherein
in the first step, the manufacturing material obtained by heating the fiber reinforced resin filament is extruded from a nozzle to form the deposited layer on the extrusion target surface, and
in the second step, while the heated nozzle is pressed against the deposited layer formed in the first step in the thickness direction of the deposited layer, the nozzle is moved relative to the deposited layer, thereby compressing the deposited layer.

6. The method for manufacturing a three-dimensional manufactured object according to claim 5, wherein
a thickness of the deposited layer is set by adjusting a height of the nozzle from the extrusion target surface.

7. The method for manufacturing a three-dimensional manufactured object according to claim 5, wherein
in the second step, a flat surface or a convex curved surface formed at a tip end of the nozzle and capable of coming into contact with the deposited layer is pressed against the deposited layer.

8. A program that generates control information for manufacturing a three-dimensional manufactured object using, as a manufacturing material, a fiber reinforced resin filament in which a base material containing a thermoplastic resin is impregnated with at least one fiber or fiber bundle, wherein
the program causes a computer to execute a procedure of, in a first step of heating the fiber reinforced resin filament and extruding the heated fiber reinforced resin filament onto an extrusion target surface to form a deposited layer of the fiber reinforced resin filament on the extrusion target surface, forming a thickness of each layer of the deposited layer to be 40% or more of a diameter before extrusion and smaller than the diameter before extrusion of the fiber reinforced resin filament.

9. The program according to claim 8, wherein
the program further executes a procedure of a second step of heating the deposited layer formed in the first step, and applying a pressure in a thickness direction of the deposited layer to form a compressed deposited layer in which a thickness of each layer of the deposited layer is made smaller than the thickness of each layer of the deposited layer when formed.

10. The program according to claim 9, wherein
the procedure of the second step includes a procedure of forming the compressed deposited layer by compressing the deposited layer to a thickness obtained by eliminating a void other than the fiber reinforced resin filament contained within a thickness of the deposited layer, or to a thickness obtained by reducing the void.

11. The program according to claim 10, wherein
a width w₁ of the deposited layer formed in one pass in the first step in a direction perpendicular to the pass on the extrusion target surface, and a thickness t₂ of the compressed deposited layer formed in the second step are set based on the following formula: $\begin{matrix}{w}_{1} ≧ \frac{4 {r}^{2} - {S}_{p}}{2 rx} , {t}_{2} ≦ \frac{2 {πr}^{3} x}{4 {r}^{2} - {S}_{p}} \\ {S}_{p} = 2 \left(hc-S\right) , h = r \left(1-x\right) , c = 2 \sqrt{h \left(2r-h\right)} \\ θ = 2 {cos}^{- 1} \left(1-\frac{h}{r}\right) , S = \frac{θ}{2} {r}^{2} - \left(r-h\right) \sqrt{h \left(2r-h\right)}\end{matrix}$
r: radius [mm] of filament
x: ratio (t₁/t₀) of thickness t₁ [mm] of deposited layer when formed to filament diameter t₀ (= 2r) [mm]
Sp: area [mm²] of void reduced by compressing deposited layer.
